# EUROPÄISCHE PATENTSCHRIFT

(11) **EP 0 387 689 B1**
(45) Veröffentlichungstag und Bekanntmachung des Hinweises auf die Patenterteilung: **22.06.1994**
(21) Anmeldenummer: 90104400.8
(22) Anmeldetag: 08.03.1990
(51) Int. Cl.: C07F 7/18

(54) **Verfahren zur Herstellung von siliciumorganischen Verbindungen**
Process for the preparation of organic silicon compounds
Procédé de préparation de composés organiques du silicium

(30) Priorität: 17.03.1989 DE 3908791
(43) Veröffentlichungstag der Anmeldung: 19.09.1990
(73) Patentinhaber: HÜLS AKTIENGESELLSCHAFT, 45764 Marl (DE)
(72) Erfinder: Kötzsch, Hans-Joachim, Dr., D-7888 Rheinfelden 1 (DE); Rauleder, Hartwig, Dr., D-7888 Rheinfelden (DE)

(56) Entgegenhaltungen:
- EP-A- 0 152 241
- DE-A- 2 652 719
- CHEMICAL ABSTRACTS Band 69, 23. September 1968, Seite 4891, Zusammenfassung Nr. 52311w, Columbus, Ohio, US; K.A. ANDRIANOV et al.: "Optical active menthoxyethyl-and menthoxypropyl (alkyl)(alkoxy)(chloro)silanes" Izv. Acad. Nauk SSSR, Ser. Khim. 1968,(2),356-60
- CHEMICAL ABSTRACTS Band 85,8. -15. November 1976, Seite 534, Zusammenfassung Nr. 143177d, Columbus, Ohio, US; M. G. VORONKOV et al.: Hydrosilylation of 3-oxa-1,4-pentadiene and 1,5-hexadiene by silicofunctional alklhydrosilanes and 1,1,3,3-tetramethyldisiloxane" & Izv.Akad Nual SSSR, Ser. Khim. 1976,(6).1368-70
- CHEMICAL ABSTRACTS Band 85, 19. Juli 1976, Seite 710, Zusammenfassung Nr. 21527x, Columbus, Ohio, US; L. Boksanyi et al.: "Note on the preparation of alkyl- and oxaalkyldimethylsilanols" & Helv. Chim. Acta 1976, 59(3), 717-27

## Beschreibung

Gegenstand der Erfindung ist ein Verfahren zur Herstellung der Verbindungen gemäß Formel (I) des Patentanspruches. Diese Stoffe sind bekannt als Bestandteil von Hydraulikflüssigkeiten nach DE-PS 26 52 719. Die dort beschriebenen Hydraulikflüssigkeiten konnten trotz ihrer überlegenen Hydraulikeigenschaften noch nicht im technischen Maßstab genutzt werden. Der Herstellungsweg der DE-PS durch Umsetzung von Chloralkylsilanestern mit Alkoholaten hat Mängel und führt zu unvollständiger Umsetzung. Verharzungen, geringe Reinheit und hoher Chlorgehalt als Ursache für Korrosion im Hydrauliksystem verhinderten die Anwendung.

Somit bestand die Aufgabe, diese Stoffe der Formel I auf einem überlegenen Verfahrensweg im technischen Maßstab herzustellen und insbesondere diese Stoffe in einwandfreier Qualität für die Verwendung als Komponenten von Hydraulikflüssigkeiten zugänglich zu machen.

Die Lösung dieser Aufgabe besteht in einem neuen Verfahrensweg. Es wurde gefunden, daß durch katalytische Anlagerung von Hydrogensilanen der Formel II gemäß Patentanspruch an endständig ungesättigte Ether der Formel III Anlagerungsprodukte der Formel IV in hoher Ausbeute und Reinheit gebildet werden, wobei aber eine definierte Temperatursteuerung erfolgen muß. Die Produkte der Formel IV können zu den Verbindungen der Formel I umgesetzt werden durch thermische und/oder katalytische Umesterung mit monofunktionellen Hydroxyverbindungen der allgemeinen Formel V. Diese Umesterung ist wichtig, wenn durch die monofunktionelle Hydroxyverbindung ein Rest -R³ mit langer Kette, d.h. mit mindestens einem oder mehreren Glykolresten einzufügen ist.

Das Prinzip der katalytischen Anlagerung von Hydrogenalkoxisilanen oder Hydrogenalkylalkoxisilanen ist an sich bekannt, beispielsweise aus C.A. 69: 52311W (1968), jedoch führt die bekannte Verfahrensweise zu. unreinen Produkten mit schlechten Ausbeuten. Wir haben gefunden, daß die Stoffe der Formel III mit endständig ungesättigter Bindung bei der exothermen Anlagerungsreaktion isomerisieren, wobei die Doppelbindung sich verschiebt und das Isomere nicht mehr zur Anlagerung an Hydrogensilane fähig ist. Daraus ergeben sich Stoffverluste. Besonders aber erfolgt eine Vergiftung des Katalysators und weitere Zugaben des Katalysators sind unwirksam.

Wir haben gefunden, daß durch Steuerung der Temperatur auf höchstens 130, vorzugsweise höchstens 110 °C der Katalysator aktiv bleibt, geringe Mengen Katalysator gebraucht werden und hohe Ausbeuten des Produktes IV sowie eine geringere Isomerisierung erreichbar ist.

Die Umesterung der Produkte der Formel IV mit Hydroxyverbindungen der Formel V war nicht bekannt. Es zeigte sich, daß das Produkt IV gegenüber dem Stoff V eine erhebliche Stabilität besitzt, besonders wenn zwei oder drei Reste R³ eingefügt werden sollen.

Wir haben gefunden, daß eine quantitative Umesterung und sehr reine Produkte erreichbar sind, besonders, wenn die Komponente V im Überschuß verwendet wird und/oder Titanester bzw. Zirkonester als Katalysatoren zur Beschleunigung der Reaktion bei gleichzeitiger Möglichkeit zur Senkung der Reaktionstemperatur verwendet werden.

Das Verfahren kann kontinuierlich oder diskontinuierlich ausgeführt werden.

Die Stoffe II und III können in Mischung miteinander oder in Mischung mit dem Katalysator zur Reaktion gebracht werden. Der Katalysator wird besonders in Mengen von 10⁻² bis 10⁻⁸ Mol je Mol Produkt verwendet. Die Kontrolle der Reaktion und die Temperatursteuerung kann durch einen Thermostaten erfolgen. Temperaturbereiche zwischen 25 und 130 °C, vorzugsweise zwischen 35 und 110 °C, sind einzuhalten. Eine Temperatursteuerung ist auch durch den Überschuß einer Komponente möglich. Es können Überschüsse einer Komponente im Molverhältnis bis zu 1 : 8 verwendet werden. Auch die Verwendung von Lösungsmitteln im Verhältnis bis zu 1 : 8 ist möglich. Die Lösungsmittel müssen bei der Reaktion inert sein.

Die Isolierung der Produkte der Formel IV erfolgt durch Destillation, vorzugsweise bei vermindertem Druck. Eine untere Grenze für den verminderten Druck kann nicht angegeben werden. Im allgemeinen sind jedoch Verbindungen der Formel IV und der Formel I bei < 10 mbar von den Ausgangsstoffen und den Verunreinigungen abtrennbar. Sofern die Stoffe IV mit den Stoffen V zu Stoffen I umgesetzt werden, sind Temperaturen von 90 bis 240 °C als Reaktionstemperatur möglich. Man kann mit und ohne Katalysator arbeiten.

Geeignete Hydrogensilane der Formel II sind sowohl Hydrogentrialkoxisilane wie auch Hydrogenmonoalkyldialkoxisilane oder Hydrogendialkylmonoalkoxisilane, worin die Alkylgruppe und die Alkoxygruppe 1 bis 4 Kohlenstoffatome unabhängig voneinander enthält. Beispiele sind Trimethoxisilan, Methyldimethoxisilan, Ethyldimethoxisilan, Dimethylmonomethoxisilan, Methylisobutylmonomethoxisilan, Triethoxisilan, Methyldiethoxisilan, Propyldiethoxisilan, Tri-sek.-butoxisilan und Methyldiisobutoxisilan.

Ausgangsstoffe der Formel III sind beispielsweise folgende Glykol- oder Polyglykol-alkyl-alkenylether:
Ethylenglykol-n-butyl-buten-1-yl-4-ether, Propylenglykol-1-methyl-2-methallylether, 1-Methoxi-4-vinyloxibutan, Propyl-vinylether und Propyl-methallylether, Diethylenglykol-monomethyl-penten-1-yl-5-ether, Diethylenglykol-monomethyl-monoallylether, Triethylenglykol-monomethyl-monoallylether, Triethylenglykol-monoethyl-monomethallylether, Triethylenglykol-monobutyl-monoallylether, Methyltetraglykolallylether, Butyltetraglykolallylether, Ethyltetraglykolvinylether, Methylpentaglykolallylether.

Darin bedeuten beispielsweise Tetraethylenglykol den Ether aus 4 Molekülen Ethylenglykol. Die Ether aus beispielsweise zwei Molekülen Ethylenglykol bzw. sechs Molekülen Ethylenglykol werden auch als Diglykol bzw. Hexaglykol bezeichnet.

Die Ether (III) mit endständig ungesättigter Alkenylgruppe können auf dem Wege der Williamson-Synthese durch Umsetzung von Hydroxyverbindungen V zum Alkalialkoholat und nachfolgender Reaktion mit Alkenylhalogeniden mit 2 bis 6 Kohlenstoffatomen hergestellt Werden.

Bei der Herstellung der Verbindungen der Formel IV, d.h. bei der Hydrosilierung der Alkenylether werden vorzugsweise Katalysatoren verwendet. Geeignete Katalysatoren bei der Herstellung der Anlagerungsprodukte IV sind Salze oder Komplexsalze von Elementen der 8. Nebengruppe, besonders von Nickel, Ruthenium, Rhodium, Palladium oder sehr bevorzugt Platin. Lösungen in z.B. Aceton, Mesityloxid, Isopropanol, Acetessigester sind zweckmäßig. Geeignete Katalysatoren sind insbesondere Hexachloroplatinsäure, Salze von Nickel, Ruthenium, Rhodium, Palladium. Bevorzugt sind Acetylacetonate sowie Acetate.

Es kommt auf die Anwesenheit des Katalysatormetalls in gelöster Form als Kation oder Komplex an. Die Temperatursteuerung auf höchstens 130 °C kann durch Zugabe von Lösungsmitteln, insbesondere Kohlenwasserstoffen wie Hexan, Heptan oder Toluol, durch den Überschuß oder die langsame Zugabe einer der beiden Reaktionskomponenten gesteuert werden.

Die hergestellten Verbindungen der Formel IV sind beispielsweise
CH₃(OC₂H₄)₅O(CH₂)₃Si(OCH₃)₃,
CH₃(OC₂H₄)₄O(CH₂)₂Si(OCH₃)₃,
n-C₄H₉(OC₂H₄)₄O(CH₂)₃Si(OCH₃)₃,
n-C₄H₉(OC₂H₄)₃O(CH₂)₃Si(OC₂H₅)₃,
C₂H₅(OC₂H₄)₃OCH₂CH(CH₃)CH₂Si(OC₂H₅)₃,
CH₃(OC₂H₄)₃O(CH₂)₃Si(CH₃)(OCH₃)₂,
CH₃(OC₂H₄)₃O(CH₂)₃Si(OC₂H₅)₃,
CH₃(OC₂H₄)₃O(CH₂)₂Si(OCH₃)₃,
CH₃(OC₂H₄)₃O(CH₂)₃Si(OCH₃)₃,
CH₃(OC₂H₄)₂O(CH₂)₃Si(OC₂H₅)₃,
CH₃OCH₂CH(CH₃)OCH₂CH(CH₃)CH₂Si(OC₂H₅)₃,
CH₃OCH₂CH(CH₃)OCH₂CH(CH₃)CH₂Si(CH₃)(O-sec-C₄H₉)₂,
CH₃(OC₂H₄)₃O(CH₂)₅Si(OCH₃)₃.

Vorzugsweise ist in diesen Produkten mindestens ein Rest -OR⁵-des Alkylenglykols enthalten.

Soweit in den Verbindungen der Formel I ein oder mehrere Reste -OR³ am Si gebunden sein sollen, schließt sich nach Destillation der Verbindungen IV eine Umesterung mit Hydroxyverbindungen der Formel V an, welche sehr bevorzugt eine Glykolgruppe oder eine Polyglykolethergruppe -OR⁵- enthalten. Geeignete Glykolmonoether der Formel V sind beispielsweise Methyldiglykol, Methyltriglykol, Ethyltriglykol, Butyltriglykol, Methyltetraglykol, Butyltetraglykol, Methylpentaglykol, 1-Methylpropanol-2, 4-Propoxibutanol-1.

Endprodukte des Verfahrens können die Stoffe der Formel I oder die Stoffe der Formel IV sein. Die Stoffe der Formel I entstehen aus Stoffen der Formel IV durch Umesterung mit Stoffen der Formel V, wobei die Reste -OR⁴ in den Stoffen der Formel IV durch die Gruppen -OR³ in den Stoffen der Formel I ersetzt werden.

Vorzugsweise werden Umesterungskatalysatoren verwendet, jedoch ist die Umesterung auch ohne Katalysatoren bei erhöhten Temperaturen ausführbar. Geeignete Umesterungskatalysatoren sind Titanorthoester und Zirkonorthoester, d.h. Orthoalkyltitanat bzw. Orthoalkylzirkonat, worin die Alkylgruppe vorzugsweise 1 bis 4 Kohlenstoffatome enthält.

Bevorzugt sind n-, Iso- oder Sek-Butylorthotitanat bzw. -zirkonat. Geeignet sind auch die entsprechenden oligomeren Titanate bzw. Zirkonate, die durch Teilhydrolyse aus den Orthoestern entstehen. Die Menge der Katalysatoren beträgt weniger als 0,1 Gew.-%, bezogen auf die Menge der Stoffe I.

Beispiel für die siliciumorganischen Verbindungen der Formel I sind
CH₃(OC₂H₄)₅O(CH₂)₃Si[(OC₂H₄)₃OCH₃]₃,
CH₃(OC₂H₄)₄O(CH₂)₃Si[(OC₂H₄)₃OCH₃]₃,
n-C₄H₉(OC₂H₄)₄O(CH₂)₃Si[(OC₂H₄)₃OCH₃]₃,
n-C₄H₉(OC₂H₄)₃O(CH₂)₃Si[(OC₂H₄)₃OCH₃]₃,
C₂H₅(OC₂H₄)₃OCH₂CH(CH₃)CH₂Si[(OC₂H₄)₃OC₂H₅]₃,
C₂H₅(OC₂H₄)₃O(CH₂)₃Si[(OC₂H₄)₃OCH₃]₃,
C₂H₅(OC₂H₄)₃O(CH₂)₂Si[(OC₂H₄)₃OCH₃]₃,
CH₃(OC₂H₄)₃O(CH₂)₃Si(CH₃)[(OC₂H₄)₃OCH₃]₂,
CH₃(OC₂H₄)₃O(CH₂)₃Si[(OC₂H₄)₃OCH₃]₃,
CH₃(OC₂H₄)₃O(CH₂)₃Si[(OC₂H₄)₃OC₂H₅]₃,
CH₃(OC₂H₄)₃O(CH₂)₃Si[(OC₂H₄)₃OC₄H₉]₃,
CH₃(OC₂H₄)₃O(CH₂)₂Si[(OC₂H₄)₃OCH₃]₃,
CH₃(OC₂H₄)₂O(CH₂)₃Si[(OC₂H₄)₂OCH₃]₃,
CH₃OCH₂CH(CH₃)OCH₂CH(CH₃)CH₂Si[OCH(CH₃)CH₂OCH₃]₃,
CH₃(OC₂H₄)₃O(CH₂)₅Si[(OC₂H₄)₃OCH₃]₃.

Vorzugsweise ist in den siliciumorganischen Verbindungen eine Gruppe -OR⁵- an den Rest -OR⁶- der Formel I gebunden. Sehr bevorzugt sind als Reste OR⁵- Polyglykolreste, d.h. Diglykolreste bis Pentaglykolreste, d.h. Reste von Polyethern, besonders des Ethylenglykols. Es ist am meisten bevorzugt, daß die Stoffe der Formel I drei Reste OR³ mit mindestens einem Glykolrest enthalten, welche vorzugsweise gleich sind.

### Beispiel 1

CH₃ (OC₂H₄)₃O(CH₂)₃Si[(OC₂H₄)₃OCH₃]₃

### A) Herstellung des Trimethylesters

In einem 2l-Kolben, ausgerüstet mit Thermostatenheizung, Innenthermometer, Rührer, Dosiertrichter und N₂-überdecktem Rückflußkühler wurden 489 g Trimethoxisilan (4 Mol) vorgelegt zusammen mit 153 g (0,75 Mol) Triethylenglykolmonomethyl-monoallylether und 0,5 ml einer Lösung mit 1 Gew.-% H₂PtCl₆ ^{.} 6H₂O in Aceton und auf 52 °C geheizt. Nach 20 min sprang die Reaktion an. Innerhalb einer Minute stieg dabei die Innentemperatur auf 83 °C an und fiel innerhalb 9 min, gesteuert durch die Thermostatentemperatur auf 67 °C. Von da an wurden innerhalb 95 min weitere 856 g (4,10 Mol) Triethylenglykol-monomethyl-monoallylether mit einer Geschwindigkeit von 9 g/min zudosiert unter Einhaltung der Thermostatentemperatur von 52 °C, wobei sich eine Reaktionstemperatur zwischen 66 und 74 °C einstellte. Nach dem Ende der Zugabe wurde das Reaktionsgemisch noch 80 min lang bei 61 °C nachgerührt und dann durch Vakuumdestillation aufgearbeitet. Es wurden 1.298 g 3-Methyltriglykoloxipropylsilan-trimethylester isoliert. Ausbeute 99,4 %, bezogen auf Trimethoxisilan, und 80,5 %, bezogen auf Triethylenglykol-monomethyl-monoallylether. Als Nebenprodukt wurden 190 g Triethylenglykol-monomethyl-monopropenylether isoliert.
Kp. 144 °C (2 mbar);
D.₄²⁰ 1,049;
n_{D}²⁰ 1,4328;
Viskosität (20 °C) 5,93 mPa.s;

### B) Herstellung des Tris-methyltriglykolesters:

In einer Apparatur nach A) wurde der Rückflußkühler gegen eine Vakuumdestillationseinrichtung ausgetauscht und ein Gemisch aus 326.5 g (1 Mol) 3-Methyltriglykoloxipropylsilan-trimethylester und 657 g (4 Mol) Methyltriglykol vorgelegt. Bei 200 mbar wurden bei einer Innentemperatur von 180 °C ansteigend bis 226 °C 84 g Methanol innerhalb 8 Std abdestilliert und schließlich bei fallendem Vakuum Weitere 12 g Methanol in der Kühlfalle aufgefangen und 164 g Methyltriglykol abdestilliert. Im Reaktor verblieben 715 g 3-Methyltriglykoloxipropylsilan-tris-methyltriglykolester entsprechend 99 % Ausbeute.
D.₄²⁰ 1,087; (D.₄²⁰ = Normaldichte bei 20 °C, gemessen gegen die Dichte von Wasser bei 4 °C)
n_{D}²⁰ 1,4538; (n_{D}²⁰ = Brechungsindex bei 20 °C)
Viskosität (20 °C) 27.8 mPa.s;

### Beispiel 2

CH₃(OC₂H₄)₃O(CH₂)₃Si[(OC₂H₄)₃OCH₃]₃

Analog Beispiel 1B) wurden dem Reaktionsansatz zusätzlich 0,5 ml Tetrabutyltitanat zugesetzt. Daraufhin trat die Umesterungsreaktion bereits bei 115 °C ein. Nach 3 Std bei 120 °C wurde 1 Std auf 139 °C erwärmt. Nach dem Abdestillieren des überschüssigen Methyltriglykols (164 g) im Vakuum wurden 719 g Produkt erhalten.

### Beispiel 3

CH₃(OC₂H₄)₃O(CH₂)₃Si[(OC₂H₄)₃OCH₃]₃

aus dem Triethylester
Analog Beispiel 1A) wurden 928 g (4,54 Mol) Triethylenglykolmonomethyl-monoallylether zusammen mit 164 g (1 Mol) Triethoxisilan und 0,5 ml der Katalysatorlösung von Beispiel 1 auf 48 °C erwärmt. Nach 35 min sprang die Reaktion an und zog die Temperatur sofort auf 78 °C. Nach Abkühlung auf 62 °C wurden weitere 164 g (1 Mol) Triethoxysilan hinzugegeben, worauf die Temperatur auf 86 °C anstieg. Danach wurden bei 63 °C wiederum 164 g Triethoxysilan zugesetzt mit Anstieg der Temperatur auf 82 °C. Abschließend wurden bei 66 °C nochmals 164 g Triethoxysilan zugesetzt mit nachfolgendem Temperaturanstieg auf 79 °C. Die Temperatur fiel in 80 min auf 59 °C. Danach wurden durch destillative Aufarbeitung 1.456 g 3-Methyltriglykoloxipropylsilan-triethylester isoliert (Ausbeute 88 %, bezogen auf Triethylenglykol-monomethyl-monoallylether, und 99 %, bezogen auf Triethoxisilan).
Kp. 154 °C (2 mbar);
D.₄²⁰ 0,999;
n_{D}²⁰ 1,4305;
Viskosität (20 °C) 5.18 mPa^{.}s;
Die Umesterungsreaktion mit Methyltriglykol Wurde mit 1 Mol des hergestellten Triethylesters analog Beispiel 2 durchgeführt und ergab 720 g reines Endprodukt.

### Beispiel 4

CH₃(OC₂H₄)₃OCH₂CH(CH₃)CH₂Si[(OC₂H₄)₃OCH₃]₃

aus dem Trimethylester
Analog Beispiel 3 wurden 959 g (4,4 Mol) Triethylenglykol-monomethyl-monomethallylether zusammen mit viermal 122 g (1 Mol) Trimethoxysilan umgesetzt. Die destillative Aufarbeitung lieferte 1.240 g Trimethylester (91 % Ausbeute, bezogen auf eingesetzten Methallylether; 98 %, bezogen auf Trimethoxysilan).
Kp. 142 °C (1 mbar);
D.₄²⁰ 1,033;
n_{D}²⁰ 1,4333;
Viskosität (20 °C) 6.22 mPa^{.}s.

Die Umesterungsreaktion mit Methyltriglykol wurde mit 1 Mol Trimethylester analog Beispiel 2 durchgeführt und ergab 730 g reines Endprodukt.
D.₄²⁰ 1,079;
n_{D}²⁰ 1,4527;
Viskosität (20 °C) 28.8 mPa.s.

### Beispiel 5

CH₃(OC₂H₄)₃OCH₂CH(CH₃)CH₂Si[(OC₂H₄)₃OCH₃]₃

aus dem Triethylester
Analog Beispiel 1 wurden 657 g (4 Mol) Triethoxisilan zusammen mit 176 g (0,8 Mol) Triethylenglykol-monomethyl-monomethallylether vorgelegt und zur Reaktion gebracht, wobei die Innentemperatur anfangs auf 87 °C anstieg. Anschließend wurden analog Beispiel 1 mit einer Geschwindigkeit von ca. 10 g/min weitere 762 g (3,5 Mol) Methallylether zugeführt. Die Aufarbeitung lieferte 1.505 g Triethylester (98 % Ausbeute, bezogen auf Triethoxisilan).
Kp. 146 °C (1 mbar);
D.₄²⁰ 0,991;
n_{D}²⁰ 1,4309;
Viskosität (20 °C) 5.42 mPa.s;

Die Umesterungsreaktion mit Methyltriglykol wurde mit 1 Mol Triethylester analog Beispiel 2 durchgeführt und ergab 730 g reines Endprodukt.

### Beispiel 6

CH₃(OC₂H₄)₃O(CH₂)₃Si(CH₃)[(OC₂H₄)₃OCH₃]₂

aus Methylhydrogendimethoxisilan
Analog Beispiel 3 wurden 878 g (4,3 Mol) Triethylenglykol-monomethyl-monoallylether zusammen mit 106 g (1 Mol) Methylhydrogendimethoxisilan und 0.4 ml Katalysatorlösung auf 45 °C erwärmt. Nach 15 min sprang die Reaktion an und zog die Temperatur sofort auf 81 °C und fiel innerhalb 12 min, gesteuert durch die Thermostatentemperatur wieder auf 58 °C. Von da an wurden innerhalb 80 min weitere 319 g (3 Mol) Methylhydrogendimethoxisilan mit einer Geschwindigkeit von ca. 4 g/min zudosiert unter Einhaltung einer Thermostatentemperatur von 49 °C, wobei sich eine Reaktionstemperatur zwischen 59 °C und 63 °C einstellte. Es wurde 120 min bei 61 °C nachgerührt und dann durch Vakuumdestillation aufgearbeitet. Es wurden 1.223 g Si-Methyl-3-Methyltriglykoloxipropyl-dimethoxisilan isoliert. Das sind 98,5 % Ausbeute, bezogen auf das eingesetzte Methylhydrogendimethoxisilan und 93 %, bezogen auf den Methyltriglykolallylether. Als Nebenprodukt wurden 60 g Methyltriglykolpropenylether isoliert.
Kp. 135 °C (1 mbar);
D.₄²⁰ 1,014;
n_{D}²⁰ 1,4359;
Viskosität (20 °C) 6.13 mPa.s;
Analog Beispiel 1B) wurden 310,5 g (1 Mol) vorstehenden Silans mit 657 g (4 Mol) Methyltriglykol bei 160 bis 196 °C umgeestert. Nach destillativer Abtrennung von ca. 63 g Methanol und 327 g Methyltriglykol wurden 561 g Si-Methyl-3-methyltriglykoloxipropylsilan-bis-methyltriglykolester entsprechend 98 % Ausbeute erhalten.
D.₄²⁰ 1,063;
n_{D}²⁰ 1,4524;
Viskosität (20 °C) 21.6 mPa.s

### Beispiel 7

CH₃OCH₂CH(CH₃)OCH₂CH(CH₃)CH₂Si[OCH(CH₃)CH₂OCH₃]₃

aus dem Triethylester
In einer Apparatur gemäß Beispiel 1A) wurden 577 g (4 Mol) 1-Methoxipropyl-2-methallylether auf 54 °C geheizt, analog Beispiel 1 0,4 ml Katalysator zugegeben und durch Zudosierung von 657 g (4 Mol) Triethoxisilan mit einer Zulaufgeschwindigkeit von ca. 4 g/min in ca. 170 min exotherm umgesetzt. Es stellte sich dabei eine durchschnittliche Reaktionstemperatur von ca. 88 °C ein (Thermostatentemperatur 54 °C). Nach Ende der Zugabe sank die Reaktionstemperatur innerhalb von ca. 45 min auf 54 °C. Danach wurden durch destillative Aufarbeitung 1.280 g 3-(1′-Methoxi-2′-propoxi)-2-methylpropylsilan-triethylester (ca. 96 % Ausbeute) isoliert.
Kp. 103 °C (1 mbar);
D.₄²⁰ 0,942;
n_{D}²⁰ 1,4182;
Viskosität (20 °C) 2.23 mPa.s
317 g (2 Mol) vorstehenden Triethylesters wurden mit 630 g (7 Mol) 1-Methoxipropanol-2 und 0,3 ml Tetraethoxititan unter einer 12-Boden-Füllkörperkolonne mit automatischem Kolonnenkopf 38 Std lang am Rückfluß gekocht bei langsamer destillativer Abnahme von insgesamt 272 g Ethanol und 90 g 1-Methoxipropanol (zuletzt im Vakuum bei ca. 50 mbar und 210 °C). Durch abschließende Rektifizierung im Vakuum wurden 862 g (ca. 98 % Ausbeute) erhalten.
Kp. 141 °C (1 mbar);
D.₄²⁰ 0,986;
n_{D}²⁰ 1,4306;
Viskosität (20 °C) 7.89 mPa.s;
Viskosität (-40 °C) 248 mPa.s;
Flammpunkt 130 °C.

### Beispiel 8

CH₃OCH₂CH₂OCH₂CH₂O(CH₂)₃Si[(OCH₂CH₂)₂OCH₃]₃

aus dem Triethoxisilan
Analog Beispiel 1A) wurden 657 g (4 Mol) Triethoxisilan und 120 g (0,75) Methyldiglykolallylether zur Reaktion gebracht und bei 69 °C mit weiteren 567 g (3,54 Mol) Methyldiglykolallylether (8 g/min) in 75 min umgesetzt. Die destillative Aufarbeitung ergab 1.272 g Methyldiglykoloxipropylsilan-triethylester (98 % Ausbeute, bezogen auf Triethoxisilan).
Kp. 125 °C (1 mbar);
D.₄²⁰ 0,984;
n_{D}²⁰ 1,4246;
Viskosität (20 °C) 3.67 mPa.s
Die Umesterung von 1 Mol analog Beispiel 2 mit Methyldiglykol in Gegenwart von 0,4 ml Zirkontetrapropylat lieferte 537 g Produkt (Ausbeute 98 %).
D.₄²⁰ 1,077;
n_{D}²⁰ 1,4480;
Viskosität (20 °C) 15.6 mPa.s.

### Beispiel 9

CH₃OCH₂CH₂OCH₂CH₂O(CH₂)₃Si[(OC₂H₄)₃OCH₃]₂(i-C₄H₉)

aus dem Dimethyloxiisobutylsilan
Analog Beispiel 3 wurden 692 g (4,32 Mol) Diethylenglykol-monomethyl-monoallylether mit 148 g (1 Mol) Isobutylhydrogendimethoxisilan und 0,4 g der Katalysatorlösung auf 58 °C erwärmt. Nach 12 min stieg die Temperatur auf 89 °C. Nach Absinken der Temperatur auf 72 °C wurden in 90 min weitere 445 g (3 Mol) Isobutylhydrogendimethoxisilan (5 g/min) bei einer Temperatur von 73 °C zudosiert. Es wurde 300 min bei 58 °C nachgerührt. Die destillative Aufarbeitung ergab 1.185 g Si-Isobutyl-3-methyldiglykoloxipropyldimethoxisilan (96 % Ausbeute, bezogen auf das eingesetzte Hydrogensilan).
Kp. 121 °C (1 mbar);
D.420 0,981;
nD20 1,4230;
Viskosität (20 °C) 3.32 mPa.s.

Die Umesterung von 1 Mol analog Beispiel 2 mit Methyltriglykol in Gegenwart von 0,2 ml Tetrapropyltitanat lieferte 557 g Produkt (Ausbeute 97 %).
D.₄²⁰ 1,052;
n_{D}²⁰ 1,4498;
Viskosität (20 °C) 20.7 mPa.s.

### Beispiel 10

C₂H₅(OC₂H₄)₃OCH₂CH₂Si[(OC₂H₄)₃OCH₃]₃

aus dem Trimethoxisilan
Analog Beispiel 1 wurde die Reaktion mit 153 g (0,75 Mol) Triethylenglykol-monoethyl-monovinylether und 489 g (4 Mol) Trimethoxisilan bei 78 °C gestartet. Die Temperatur stieg auf 84 °C. In 180 min wurden noch 564 g (3,25 Mol) Ethyltriglykolvinylether (3 g/min) zudosiert. Es wurde 180 min bei 92 °C nachgerührt. Die destillative Aufarbeitung lieferte 1.282 g 2-Ethyltriglykoloxiethylsilan-trimethylester (98 % Ausbeute).
Kp. 143 °C (2 mbar);
D.₄²⁰ 1,050;
n_{D}²⁰ 1,4326;
Viskosität (20 °C) 5.90 mPa.s.

Die Umesterung zum Tris-methyltriglykolester erfolgte analog Beispiel 2.
D.₄²⁰ 1,088;
n_{D}²⁰ 1,4538;
Viskosität (20 °C) 27.7 mPa.s

### Beispiel 11

C₂H₅(OC₂H₄)₃O(CH₂)₃Si(OR³)₃ OR³

(OR³ = Methoxi-, -ethoxi-, -methyltriglykol-, -ethyltriglykol-, -butyl-triglykol-Rest)
aus dem Trimethoxisilan
Analog Beispiel 1 wurden 164 g (0,75 Mol) Triethylenglykol-monoethyl-monoallylether bei 52 °C mit 489 g (4 Mol) Trimethoxisilan zur Reaktion gebracht und bei 73 °C die Reaktion mit weiteren 864 g (3,96 Mol) Triethylenglykol-monoethyl-monoallylether zu Ende geführt. Die destillative Aufarbeitung ergab 1.338 g 3-Ethyltriglykoloxipropylsilan-trimethylester (96 % Ausbeute, bezogen auf Trimethoxisilan).
Kp. 145 °C (1 mbar);
D.₄²⁰ 1,031;
n_{D}²⁰ 1,4322;
Viskosität (20 °C) 6.32 mPa.s.
Triethylester, hergestellt analog Beispiel 3: Ausbeute 99 %, bezogen auf Triethoxisilan, und 89 %, bezogen auf Triethylenglykol-monoethyl-monoallylether.
Kp. 155 °C (1 mbar);
D.₄²⁰ 0,989;
n_{D}²⁰ 1,4302;
Viskosität (20 °C) 5.49 mPa.s.
Tris-methyltriglykolester, hergestellt aus dem Trimethylester mit Methyltriglykol analog Beispiel 2.
D.₄²⁰ 1,080;
n_{D}²⁰ 1,4538;
Viskosität (20 °C) 29.8 mPa.s
Tris-Ethyltriglykolester, hergestellt aus dem Triethylester mit Ethyltriglykol analog Beispiel 2.
D.₄²⁰ 1,076;
n_{D}²⁰ 1,4537;
Viskosität (20 °C) 39.2 mPa.s
Tris-butyltriglykolester, hergestellt aus dem Trimethylester mit Butyltriglykol analog Beispiel 2.
D.₄²⁰ 1,072;
n_{D}²⁰ 1,4540;
Viskosität (20 °C)40.6 mPa.s.

### Beispiel 12

CH₃(OC₂H₄)₄O(CH₂)₃Si[(OC₂H₄)₃OCH₃]₃

aus dem Trimethoxisilan
Analog Beispiel 1 wurden 186 g (0,75 Mol) Tetraethylenglykol-monomethyl-monoallylether bei 52 °C Starttemperatur mit 4 Mol Trimethoxisilan zur Reaktion gebracht und die Umsetzung mit weiteren 973 g (3,92 Mol) Tetraethylenglykol-monomethyl-monoal5 lylether zu Ende geführt. Es wurden 1.450 g 3-Methyl-tetraglykoloxipropyl-trimethoxisilan isoliert. Ausbeute 98 %, bezogen auf Trimethoxisilan.
Kp. 168 °C (1 mbar);
D.₄²⁰ 1,057;
n_{D}²⁰ 1,4372;
Viskosität (20 °C) 8.65 mPa.s.
Tris-methyltriglykolester, hergestellt analog Beispiel 2:
D.₄²⁰ 1,084;
n_{D}²⁰ 1,4537;
Viskosität (20 °C) 32 mPa.s.

### Beispiel 13

CH₃(OC₂H₄)₅O(CH₂)₃Si[(OC₂H₄)₃OCH₃]₃

Analog Beispiel 1 wurden 73 g (0,25 Mol) Pentaethylenglykol-monomethyl-monoallylether bei 52 °C Starttemperatur mit 1 Mol Trimethoxisilan zur Reaktion gebracht und die Umsetzung mit weiteren 251 g (0,86 Mol) Pentaethylenglykol-monomethyl-monoallylether bei 82 °C zu Ende geführt. Es wurden 402 g 3-Methylpentaethylenglykoloxipropyl-trimethoxisilan (97 % Ausbeute, bezogen auf das Hydrogensilan) isoliert.
Kp. 184 °C (1 mbar);
D.₄²⁰ 1,064;
n_{D}²⁰ 1,4421;
Viskosität (20 °C) 12.4 mPa.s.
Tris-methyltriglykolester, hergestellt aus dem Trimethylester analog Beispiel 2:
D.₄²⁰ 1,086;
n_{D}²⁰ 1,4549;
Viskosität (20 °C) 39.2 mPa.s

### Beispiel 14

C₄H₉(OC₂H₄)₄O(CH₂)₃Si[(OC₂H₄)₃OCH₃]₃

Analog Beispiel 1 wurden 73 g (0,25 Mol) Tetraethylenglykol-monobutyl-monoallylether bei 52 °C Starttemperatur mit 1 Mol Trimethoxisilan zur Reaktion gebracht und die Umsetzung mit weiteren 256 g (0,88 Mol) Tetraethylenglykol-monobutyl-monoallylether zu Ende geführt. Isoliert wurden 392 g 3-Butyltriglykoloxipropyltrimethoxisilan (95 % Ausbeute, bezogen auf Hydrogensilan).
Kp. 180 °C (1 mbar);
D.₄²⁰ 1,023;
n_{D}²⁰ 1,4381;
Viskosität (20 °C) 10.2 mPa.s
Tris-Methyltriglykolester, hergestellt aus dem Trimethylester analog Beispiel 2:
D.₄²⁰ 1,070;
n_{D}²⁰ 1,4545;
Viskosität (20 °C) 37.0 mPa.s

### Beispiel 15

C₄H₉(OC₂H₄)₃O(CH₂)₃Si[(OC₂H₄)₃OCH₃]₃

Analog Beispiel 1 wurden 172 g (0,7 Mol) Triethylenglykol-monobutyl-monoallylether bei 52 °C Starttemperatur mit 3 Mol Triethoxisilan zur Reaktion gebracht und die Umsetzung mit weiteren 650 g (2,64 Mol) Triethylenglykol-monobutyl-monoallylether zu Ende geführt (75 °C). Isoliert wurden 1.205 g 3-Butyltriglykoloxipropyltriethoxisilan (98 % Ausbeute, bezogen auf das eingesetzte Silan und ca. 88 %, bezogen auf den Glykolether).
Kp. 170 °C (1 mbar);
D.₄²⁰ 0,974;
n_{D}²⁰ 1,4334;
Viskosität (20 °C) 6.41 mPa.s.
Tris-methyltriglykolester, hergestellt aus dem Triethylester analog Beispiel 2.
D.₄²⁰ 1,067;
n_{D}²⁰ 1,4532;
Viskosität (20 °C) 30.9 mPa.s

### Beispiele A) und B)

Beispiel 1 wurde wiederholt. Bei 110 °C wurde die Reaktion gestartet. Ohne Regelung der Temperatur ergab sich eine Innentemperatur von 159 °C. Trimethoxisilan (A) wurde nur zu 50 % umgesetzt. Nach Senken der Temperatur auf 112 °C wurde kein weiteres Hydrogensilan umgesetzt, auch nicht bei Zugabe von weiterem Katalysator (Ausbeute 38 %). Hohe Anteile des Allylethers wurden in den Propenylether umgewandelt.

Triethoxisilan (B) verhielt sich entsprechend, es wurden nur 60 % Ausbeute erhalten.

### Beispiel 16

Beispiel 1A wurde wiederholt, wobei mit entsprechendem Ergebnis als Katalysatoren jeweils 1 Gew.-% bzw. 1,5 Gew.-% Pt-Acetylacetonat, Pd-Acetat, Rh-Acetylacetonat und Ni-Acetat verwendet wurden.

## Patentansprüche

1. Verfahren zur Herstellung von siliciumorganischen Verbindungen der allgemeinen Formel 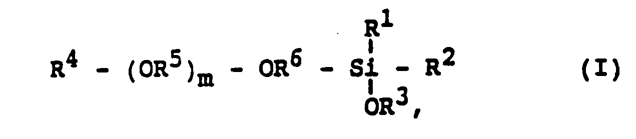 worin bedeuten:
R¹ und R² jeweils unabhängig voneinander eine geradkettige oder verzweigte Alkylgruppe mit 1 bis 4 Kohlenstoffatomen oder eine Gruppe der Formel OR³,
R³ eine Gruppe der Formel R⁴ - (OR⁵)ₘ -,
R⁴ eine geradkettige oder verzweigte Alkylgruppe mit 1 bis 4 Kohlenstoffatomen,
R⁵ eine geradkettige oder verzweigte Alkylengruppe mit 2 bis 4 Kohlenstoffatomen, wobei die Gruppen R⁵ gleich oder verschieden sein können,
R⁶ eine geradkettige oder verzweigte Alkylengruppe mit 2 bis 6 Kohlenstoffatomen, und
m die Zahl 0 bis 6 ist,
***dadurch gekennzeichnet***, daß man Hydrogensilane der Formel 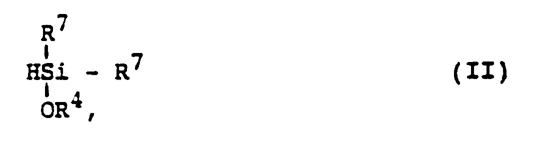 worin
R⁷ gleiche oder verschiedene Gruppen R⁴ oder die Gruppe OR⁴ bedeuten und R⁴ die genannte Bedeutung hat,
in Gegenwart eines Katalysators bei Temperaturen von 25 bis 130°C anlagert an einen endständig ungesättigten Ether der Formel
R⁴ - (OR⁵)ₘ - OR⁸ (III),
worin m, R⁴ und R⁵ die genannte Bedeutung haben und R⁸ eine endständig ungesättigte, geradkettige oder verzweigte Alkenylgruppe mit 2 bis 6 Kohlenstoffatomen bedeutet, und die resultierenden Anlagerungsprodukte der Formel 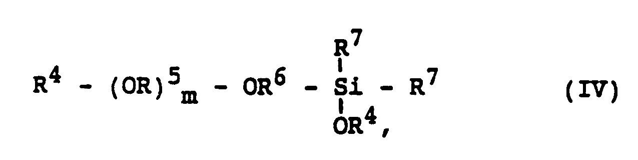 worin m und R⁴ bis R⁷ die genannte Bedeutung haben und R⁴ gleich oder verschieden ist und ggf. thermisch oder in Gegenwart eines Katalysators mit monofunktionellen Hydroxiverbindungen der Formel
R⁴ - (OR⁵)ₘ OH (V),
worin m, R⁴ und R⁵ die genannte Bedeutung haben, zu den siliciumorganischen Stoffen der Formel (I) umestert.

2. Verfahren nach Anspruch 1, ***dadurch gekennzeichnet*****,** daß man als Katalysatoren zur Herstellung der Verbindungen mit der Formel (IV) Verbindungen der Elemente der achten Nebengruppe des Periodensystems, vorzugsweise des Nickels, Rutheniums, Rhodiums, Palladiums oder Platins, verwendet.

3. Verfahren nach Anspruch 1 oder 2, ***dadurch gekennzeichnet***, daß man bei der Herstellung der Verbindung der Formel (IV) die Reaktionstemperatur der exothermen Hydrosilierung zwischen 25 und 130 °C einhält.

4. Verfahren nach einem der Ansprüche 1 bis 3, ***dadurch gekennzeichnet***, daß man bei der Herstellung der Verbindung der Formel (IV) Lösungsmittel, das Produkt IV selbst und/oder einen Überschuß der Komponente II oder III zusetzt.

5. Verfahren nach Anspruch 1, ***dadurch gekennzeichnet***, daß man zur Herstellung der Verbindungen I die Komponente V in äquivalenter Menge zur Anzahl der Gruppen -OR⁴ in der Verbindung IV oder im Überschuß bis zu drei Äquivalenten anwendet.

6. Verfahren nach Anspruch 1 und 5, ***dadurch gekennzeichnet***, daß man die thermische Umesterung bei Temperaturen zwischen 90 bis 240 ° C durchführt.

7. Verfahren nach Anspruch 1 und 6, ***dadurch gekennzeichnet***, daß man als Umesterungskatalysatoren lösliche halogenfreie Titan- oder Zirkonester einsetzt.

8. Stoffe der Formel 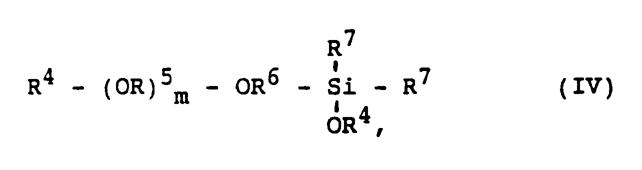 worin bedeuten:
R⁴ eine geradkettige oder verzweigte Alkylgruppe mit 1 bis 4 Kohlenstoffatomen,
R⁵ eine geradkettige oder verzweigte Alkylengruppe mit 2 bis 4 Kohlenstoffatomen, wobei die Gruppen R⁵ gleich oder verschieden sein können,
R⁶ eine geradkettige oder verzweigte Alkylengruppe mit 2 bis 6 Kohlenstoffatomen, und
m die Zahl 0 bis 6 ist.
R⁷ gleiche oder verschiedene Gruppen R⁴ oder die Gruppe OR⁴ bedeuten, worin R⁴ die genannte Bedeutung hat.

## Claims

1. Process for the production of organosilicon compounds of the general formula 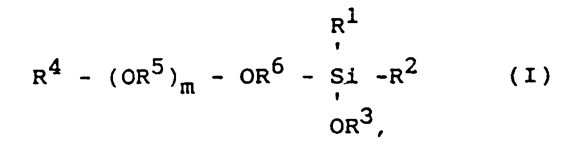 wherein:
R¹ and R² denote respectively, independently of one another, a straight-chain or branched alkyl group of 1 to 4 carbon atoms or a group of the formula OR³,
R³ denotes a group of the formula R⁴ - (OR⁵)ₘ -,
R⁴ denotes a straight-chain or branched alkyl group with 1 to 4 carbon atoms,
R⁵ denotes a straight-chain or branched alkylene group with 2 to 4 carbon atoms, with it being possible for the groups R⁵ to be the same or different,
R⁶ denotes a straight-chain or branched alkylene group with 2 to 6 carbon atoms, and
m is the number 0 to 6,
**characterised in that** hydrogensilanes of the formula 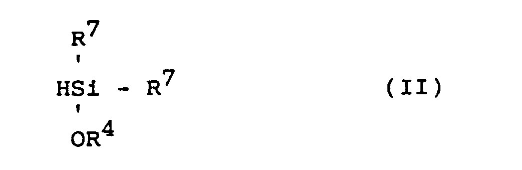 wherein
R⁷ denotes the same or different groups R⁴ or the group OR⁴ and R⁴ has the indicated meaning,
are added in the presence of a catalyst at temperatures of 25 to 130°C to a terminally unsaturated ether of the formula
R⁴ - (OR⁵)ₘ - OR⁸ (III)
,
wherein m, R⁴ and R⁵ have the indicated meaning and R⁸ denotes a terminally unsaturated straight-chain or branched alkenyl group with 2 to 6 carbon atoms, and the resulting addition product of the formula 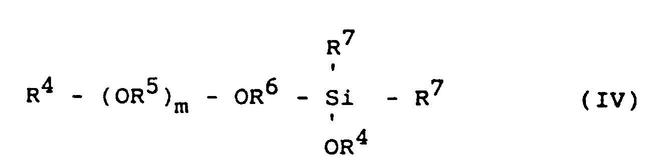 wherein m and R⁴ to R⁷ have the indicated meaning and R⁴ is the same or different, is optionally transesterified, thermally or in the presence of a catalyst, with monofunctional hydroxy compounds of the formula
R⁴ - (OR⁵)ₘ OH (V)
,
wherein m, R⁴ and R⁵ have the indicated meaning to form the organosilicon substances of the Formula (I).

2. Process according to claim 1, **characterised in** that compounds of the elements of the eighth sub-group of the Periodic system, preferably of nickel, ruthenium, rhodium, palladium or platinum, are used as catalyst for the production of the compounds with the formula (IV).

3. Process according to claim 1 or 2, **characterised** in that, in the production of the compound of formula (IV) the reaction temperature of the exothermic hydrosilation is kept between 25 and 130°C.

4. Process according to one of claims 1 to 3, characterised in that, solvent, the product IV itself and/or an excess of the component II or III are supplied in the production of the compound of Formula (IV).

5. Process according to claim 1, **characterised in** that, for the production of the compounds I, the component V is used in equivalent amounts to the number of groups -OR⁴ in the compound IV or in excess of up to three equivalents.

6. Process according to claim 1 and 5, characterised in that the thermal transesterification is carried out at temperatures between 90 to 240°C.

7. Process according to claim 1 and 6, **characterised in that** soluble halogen-free titanium or zirconium esters are employed as transesterification catalysts.

8. Substances of the formula 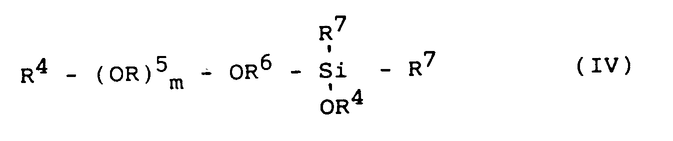 wherein:
R⁴ denotes a straight chain or branched alkyl group with 1 to 4 carbon atoms,
R⁵ denotes a straight chain or branched alkylene group with 2 to 4 carbon atoms, wherein the groups R⁵ can be the same or different,
R⁶ denotes a straight chain or branched alkylene group with 2 to 6 carbon atoms,
R⁷ denotes the same or different groups R⁴ or the group OR⁴, wherein R⁴ has the indicated meaning, and
m is the number 0 to 6.

## Revendications

1. Procédé pour préparer des composés organiques du silicium répondant à la formule générale : 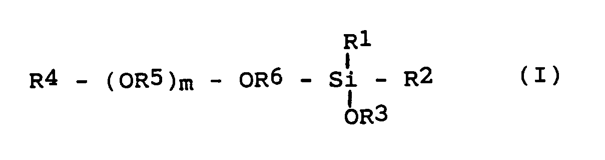 dans laquelle :
R¹ et R² représentent chacun, indépendamment l'un de l'autre, un groupe alkyle linéaire ou ramifié ayant 1 à 4 atomes de carbone ou un groupe de formule OR³,
R³ représente un groupe de formule R⁴ - (OR⁵)ₘ -,
R⁴ représente un groupe alkyle linéaire ou ramifié ayant 1 à 4 atomes de carbone,
R⁵ représente un groupe alkylène linéaire ou ramifié ayant 2 à 4 atomes de carbone, les groupes R⁵ pouvant être identiques ou différents,
R⁶ représente un groupe alkylène linéaire ou ramifié ayant 2 à 6 atomes de carbone , et
m est un nombre valant 0 à 6,
procédé caractérisé en ce qu'on fixe des hydrogénosilanes de formule : 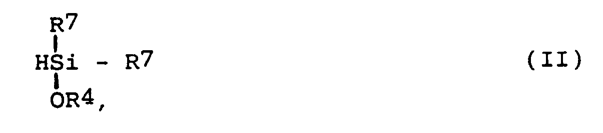 dans laquelle :
R⁷ représente des groupes R⁴ identiques ou différents ou représente le groupe OR⁴ et R⁴ a le sens cité, en présence d'un catalyseur, à des températures de 25 à 130°C, sur un éther à insaturation terminale, de formule
R⁴ - (OR⁵)ₘ - OR⁸ (III)
,
(dans laquelle m, R⁴ et R⁵ ont le sens cité, et R⁸ représente un groupe alcényle linéaire ou ramifié, terminal insaturé, comportant 2 à 6 atomes de carbone) et l'on soumet les produits de fixation ainsi obtenus, de formule 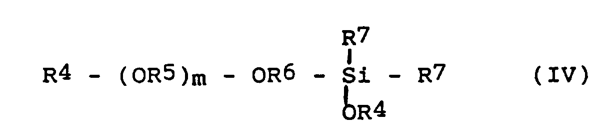 (dans laquelle m et R⁴ à R⁷ ont le sens indiqué et les R⁴ sont identiques ou différents) éventuellement à une transestérification, effectuée par vole thermique ou en présence d'un catalyseur, avec des composés hydroxylés monofonctionnels de formule :
R⁴ - (OR⁵)ₘ OH (V)
(dans laquelle, m, R⁴ et R⁵ ont les sens indiqués ci-dessus) pour obtenir les substances organiques de silicium répondant à la formule (I).

2. Procédé selon la revendication 1, caractérisé en ce qu'on utilise comme catalyseurs pour préparer les composés de formule (IV) des composés des éléments du huitième sous-groupe du Tableau Périodique, avantageusement des composés du nickel, du ruthénium, du rhodium, du palladium ou du platine.

3. Procédé selon la revendication 1 ou 2, caractérisé en ce que, lors de la préparation du composé de formule (IV), la température de la réaction d'hydrosilylation exothermique se situe entre 25 et 130°C.

4. Procédé selon l'une des revendications 1 à 3, caractérisé en ce que, lors de la préparation du composé de formule (IV), on ajoute du solvant, le produit IV lui-même et/ou un excès des constituants II ou III.

5. Procédé selon la revendication 1, caractérisé en ce que, pour préparer les composés I, on utilise le constituant (V) en une quantité équivalente au nombre des groupes -OR⁴ dans le composé IV ou en un excès allant jusqu'à trois équivalents.

6. Procédé selon la revendication 1 et 5, caractérisé en ce qu'on effectue la transestérification thermique à des températures comprises entre 90 et 240°C.

7. Procédé selon la revendication 1 et 6, caractérisé en ce qu'on utilise comme catalyseur de transestérification des esters de titane ou de zirconium, dépourvus d'halogène et solubles.

8. Substances de formule 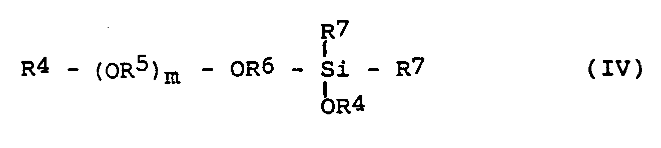 dans laquelle :
R⁴ représente un groupe alkyle linéaire ou ramifié ayant 1 à 4 atomes de carbone,
R⁵ représente un groupe alkylène linaire ou ramifié ayant 2 à 4 atomes de carbone, les groupes R⁵ pouvant être identiques ou différents,
R⁶ représente un groupe alkylène linéaire ou ramifié ayant 2 à 6 atomes de carbone,
m est un nombre valant 0 à 6.
R7 représente des groupes R⁴ identiques ou différents, ou le groupe OR⁴, dans lequel R⁴ a le sens précité.
